# EUROPEAN PATENT SPECIFICATION

(11) **EP 3 224 064 B1**
(45) Date of publication and mention of the grant of the patent: **04.09.2019**
(21) Application number: 15818038.0
(22) Date of filing: 13.11.2015
(51) Int. Cl.: B60C 19/00

(54) **TYRE COMPRISING A FOAM MATERIAL FOR ACOUSTIC ABSORPTION**
REIFEN MIT EINEM SCHAUMSTOFF ZUR AKUSTISCHEN ABSORPTION
PNEUMATIQUE COMPRENANT UN MATÉRIAU EN MOUSSE POUR ABSORPTION ACOUSTIQUE

(30) Priority: 13.11.2014 IT RM20140667
(43) Date of publication of application: 04.10.2017
(73) Proprietor: Bridgestone Corporation, Tokyo 104-8340 (JP)
(72) Inventor: AGORETTI, Pasquale, I-00040 Ariccia (IT); AMURRI, Michele, I-00122 Roma (IT)
(74) Representative: Marchetti, Alessio
(86) International application number: PCT/IB2015/058787
(87) International publication number: WO 2016/075668

(56) References cited:
- EP-A1- 1 676 722
- EP-A2- 0 367 556
- DE-A1- 19 750 229
- US-A1- 2013 048 181

## Description

### TECHNICAL FIELD

The present invention concerns a tyre comprising a foam material for acoustic absorption. More precisely, the present invention concerns a tyre comprising a foam material housed in the inner cavity covered in an air-impermeable layer and filled with air under pressure.

### BACKGROUND ART

One of the noises produced by a tyre when running is the sound of the cavity resonance generated by the vibrations of the air under pressure present in the inner cavity of the tyre. To abate this type of noise, the use of foam materials applied to the surface of the impermeable layer of the tyre inner cavity has been known for some time.

In this regard it should be said that the frequencies in the range between 180 and 300 Hz are those that mainly characterise the cavity resonance sound generated by the vibrations of the air under pressure, and they are perceived mostly inside the vehicle.

The foam materials commonly used for this purpose have the drawback of not being very effective in the absorption of acoustic waves in the above-mentioned frequency range.

The need was therefore felt for a foam material which is effective especially in the absorption of acoustic waves at a frequency ranging from 180 to 300 Hz.

The Applicant has found that a foam material consisting mainly of open cells having an average size ranging from 150 to 190 µm with a standard deviation ranging from 5 to 15%, is able to ensure improved absorption of acoustic waves at frequencies ranging from 180 to 300 Hz.

In particular, it has been verified that if the average dimensions of the cells comply with the condition relative to the dimension (average size ranging from 150 to 190 µm) but with a standard deviation greater than 15%, the advantages in terms of acoustic absorption cannot be considered satisfactory. In other words, the inventors of the present invention have found that a fundamental parameter for obtaining the advantages sought in terms of acoustic absorption is that at least 85% of the cells have a size ranging from 150 to 190 µm.

EP1676722, corresponding with the preamble of claim 1, discloses a pneumatic tire with a double layer innerliner structure for reducing noise generated by air vibrations including a second innerliner layer of foamed porous rubber having an open-celled structure with a plurality of open cavities, wherein the cavities have a mean diameter of 50-250 1/4m, preferably 130-200 1/4m.

US2013048181 discloses an elastic vehicle tire comprising a tire cavity with a noise dampening insert disposed therein. A ventilation layer having a structure permeable to air at least in the transverse and/or longitudinal direction of the running strip is disposed between the noise dampening insert and connected to the inner side of the running strip. Said layer is suitable for passing an air flow at least partially in contact with the inner wall of the running strip.

### DISCLOSURE OF INVENTION

The subject of the present invention is a tyre comprising an impermeable layer designed to ensure sealing under pressure of the air contained in the inner cavity of the carcass and a foam material housed inside said inner cavity, preferably at least in an area below a respective tread band; said tyre being characterised in that said foam material has a porosity consisting of open cells having an average size ranging from 150 to 190 µm with a standard deviation ranging from 5% to 15%.

Preferably, said foam material has a density ranging from 10 to 15 Kg/m³.

Preferably, said foam material is made of polyurethane, more preferably polyester-based or polyether-based polyurethane.

Preferably, the foam material occupies a volume ranging from 0.1 to 100% of the volume of the inner cavity. More preferably, the foam material has a thickness ranging from 10 to 200 mm and a width ranging from 10 to 100% of the width of the inner cavity.

Preferably, the foam material occupies a volume ranging from 0.4 to 20% of the volume of the inner cavity. More preferably, the foam material has a thickness ranging from 20 to 30 mm and a width ranging from 20 to 40% of the width of the inner cavity.

Preferably, said foam material is housed on the inner surface of the impermeable layer of the inner cavity of the tyre.

Preferably, the foam material can be housed in the cavity in the shape of a toroid, or in the shape of a strip with length equal to that of the impermeable layer, or in the shape of single segments assembled so as to cover the entire length of the impermeable layer.

### BEST MODE FOR CARRYING OUT THE INVENTION

Some embodiment examples are given below for purely illustrative non-limiting purposes.

The Applicant has made a comparison in terms of acoustic absorption in the frequency range between 180 and 300 Hz between a foam material commonly used in tyres and a series of foam materials according to the present invention.

The foam material for comparison (Conf) is marketed under the trade name Metzonor 023 and is produced by Metzler Schaum GMBH. In particular, the foam material for comparison in made of polyurethane with a density of 23 Kg/m³. In particular, the cells of the foam material for comparison have an average size ranging from 250 to 400 µm with a standard deviation ranging from 20% to 30%.

The foam material of the invention is made of polyurethane and is characterised by a density ranging from 10 to 15 Kg/m³ and cells having an average size ranging from 150 to 190 µm with a standard deviation ranging from 5% to 15%. In particular, three samples were tested according to the following invention characterised by the following cell dimension: 150 µm (EXP 1), 170 µm (EXP 2) and 190 µm (EXP 3).

The acoustic absorption test was performed according to the ISO 10534-2 standard at a frequency ranging from 180 to 300 Hz.

Table I shows the results of acoustic absorption tests indexed to the result obtained with the foam material for comparison.

**TABLE I**

| | Conf | Exp 1 | Exp 2 | Exp 3 |
|---|---|---|---|---|
| Acoustic absorption coefficient | 100 | 340 | 300 | 240 |

As can be seen from the values in Table I, in the frequency range between 180 and 300 Hz, the foam materials of the present invention ensure an acoustic absorption greater (from approximately two and a half times to three and a half times greater) than that of the foam material for comparison.
Since the acoustic waves at low frequency (180-300 Hz) are those that characterise the cavity resonance sound generated by the vibrations of the air under pressure, the above evidence shows that the foam material subject of the present invention is able to ensure a general abatement of the noise level coming from the tyre when it is running.

## Claims

1. A tyre comprising an impermeable layer designed to ensure the sealing under pressure of the air contained in the inner cavity of the carcass and a foam material housed on the inside of said inner cavity; said tyre being **characterized in that** said foam material has a porosity made up of open cells having an average size ranging from 150 to 190 µm with a standard deviation ranging from 5% to 15%;
**characterized in that** said foam material has a density ranging from 10 to 15 Kg/m³ and is made of polyester-based or polyether-based polyurethane.

2. A tyre according to claim 1, **characterized in that** said foam material occupies a volume ranging from 0.1 to 100% of the volume of the inner cavity.

3. A tyre according to claim 2, **characterized in that** said foam material has a thickness ranging from 10 to 200 mm and a width ranging from 10 to 100% of the width of the inner cavity.

4. A tyre according to one of the previous claims, **characterized in that** said foam material occupies a volume ranging from 0.4 to 20% of the volume of the inner cavity.

5. A tyre according to claim 4, **characterized in that** said foam material has a thickness ranging from 20 to 30 mm and a width ranging from 20 to 40% of the width of the inner cavity.

6. A tyre according to one of the previous claims, **characterized in that** said foam material is housed on a surface of the impermeable layer of the inner cavity of said tyre.

7. A tyre according to one of the previous claims, **characterized in that** said foam material is housed in the cavity in the shape of a toroid, or in the shape of a strip with a length that is equal to the one of the impermeable layer, or in the shape of single segments that are assembled so as to cover the entire length of the impermeable layer.

## Patentansprüche

1. Reifen, umfassend eine undurchlässige Schicht, die so gestaltet ist, dass sie die Abdichtung unter Druck der in dem inneren Hohlraum des Korpus enthaltenen Luft sicherstellt, und ein Schaummaterial, das an der Innenseite des inneren Hohlraums aufgenommen ist; wobei der Reifen **dadurch gekennzeichnet ist, dass** das Schaummaterial eine Porosität aus offenen Zellen mit einer mittleren Größe im Bereich von 150 bis 190 µm mit einer Standardabweichung im Bereich von 5 % bis 15 % aufweist; **dadurch gekennzeichnet, dass** das Schaummaterial eine Dichte im Bereich von 10 bis 15 kg/m³ aufweist und aus Polyurethan auf Polyester- oder Polyether-Basis hergestellt ist.

2. Reifen nach Anspruch 1, **dadurch gekennzeichnet, dass** das Schaummaterial ein Volumen im Bereich von 0,1 bis 100 % des Volumens des inneren Hohlraums einnimmt.

3. Reifen nach Anspruch 2, **dadurch gekennzeichnet, dass** das Schaummaterial eine Dicke im Bereich von 10 bis 200 mm und eine Breite im Bereich von 10 bis 100 % der Breite des inneren Hohlraums aufweist.

4. Reifen nach einem der vorhergehenden Ansprüche, **dadurch gekennzeichnet, dass** das Schaummaterial ein Volumen im Bereich von 0,4 bis 20 % des Volumens des inneren Hohlraums einnimmt.

5. Reifen nach Anspruch 4, **dadurch gekennzeichnet, dass** das Schaummaterial eine Dicke im Bereich von 20 bis 30 mm und eine Breite im Bereich von 20 bis 40 % der Breite des inneren Hohlraums aufweist.

6. Reifen nach einem der vorhergehenden Ansprüche, **dadurch gekennzeichnet, dass** das Schaummaterial auf einer Oberfläche der undurchlässigen Schicht des inneren Hohlraums des Reifens untergebracht ist.

7. Reifen nach einem der vorhergehenden Ansprüche, **dadurch gekennzeichnet, dass** das Schaummaterial in dem Hohlraum in der Form eines Toroids, oder in der Form eines Streifens mit einer Länge gleich derjenigen der undurchlässigen Schicht, oder in der Form von einzelnen Segmenten, die so zusammengesetzt sind, dass sie die gesamte Länge der undurchlässigen Schicht bedecken, untergebracht ist.

## Revendications

1. Pneu comprenant une couche imperméable conçue pour garantir l'étanchéité sous pression de l'air contenu dans la cavité interne de la carcasse et un matériau en mousse logé à l'intérieur de ladite cavité interne ; ledit pneu étant **caractérisé en ce que** ledit matériau en mousse a une porosité constituée d'alvéoles ouvertes ayant une taille moyenne allant de 150 à 190 µm avec un écart type allant de 5 % à 15 % ; **caractérisé en ce que** ledit matériau en mousse a une masse volumique allant de 10 à 15 kg/m³ et est constitué de polyuréthane à base de polyester ou à base de polyéther.

2. Pneu selon la revendication 1, **caractérisé en ce que** ledit matériau en mousse occupe un volume allant de 0,1 à 100 % du volume de la cavité interne.

3. Pneu selon la revendication 2, **caractérisé en ce que** ledit matériau en mousse a une épaisseur allant de 10 à 200 mm et une largeur allant de 10 à 100 % de la largeur de la cavité interne.

4. Pneu selon l'une des revendications précédentes, **caractérisé en ce que** ledit matériau en mousse occupe un volume allant de 0,4 à 20 % du volume de la cavité interne.

5. Pneu selon la revendication 4, **caractérisé en ce que** ledit matériau en mousse a une épaisseur allant de 20 à 30 mm et une largeur allant de 20 à 40 % de la largeur de la cavité interne.

6. Pneu selon l'une des revendications précédentes, **caractérisé en ce que** ledit matériau en mousse est logé sur une surface de la couche imperméable de la cavité interne dudit pneu.

7. Pneu selon l'une des revendications précédentes, **caractérisé en ce que** ledit matériau en mousse est logé dans la cavité sous la forme d'un tore, ou sous la forme d'une bande avec une longueur qui est égale à celle de la couche imperméable, ou sous la forme de segments uniques qui sont assemblés de façon à couvrir la longueur entière de la couche imperméable.
